Europäisches Patentamt

European Patent Office

Office européen des brevets

(19)

(11) Veröffentlichungsnummer: **0 024 745 B1**

# EUROPÄISCHE PATENTSCHRIFT

(12)

(45) Veröffentlichungstag der Patentschrift:
04.05.83

(51) Int. Cl.³: **B 23 Q 3/157**

(21) Anmeldenummer: 80105221.8

(22) Anmeldetag: 02.09.80

(54) Werkzeugmaschine mit automatischem Werkzeugwechsel.

(30) Priorität: 03.09.79 DE 2935523

(43) Veröffentlichungstag der Anmeldung:
11.03.81 Patentblatt 81/10

(45) Bekanntmachung des Hinweises auf die Patenterteilung:
04.05.83 Patentblatt 83/18

(84) Benannte Vertragsstaaten:
**CH FR GB IT LI SE**

(56) Entgegenhaltungen:
**DE-A-1 477 347**
**US-PS-4 122 597**

(73) Patentinhaber: Gebr. Heller Maschinenfabrik GmbH, Postfach 1428 Neuffener Strasse 54, D-7440 Nürtingen (DE)

(72) Erfinder: Hiller, Norbert, Teckstrasse 23, D-7317 Wendlingen (DE)

(74) Vertreter: Reinländer & Bernhardt Patentanwälte, Orthstrasse 12, D-8000 München 60 (DE)

BUNDESDRUCKEREI BERLIN

## Werkzeugmaschine mit automatischem Werkzeugwechsel

Die Erfindung betrifft eine Werkzeugmaschine mit automatischem Werkzeugwechsel nach dem Oberbegriff des Anspruchs 1.

Solche Werkzeugmaschinen sind bekannt (DE-C-1 552 324). Diese bekannte Maschine hat vor allem drei Nachteile. Das Werkzeugmagazin ist bei dieser bekannten Maschine auf die Spindeleinheit montiert, dadurch können sich Erschütterung, die dann entstehen, wenn die Werkzeugauswahlbewegung des Magazins sehr schnell erfolgen muß und deshalb große Brems- und Beschleunigungskräfte auftreten, auf die Spindel übertragen, so daß die Bearbeitungsgenauigkeit beeinträchtigt wird. Bei hohen Anforderungen an die Bearbeitungsgenauigkeit sollte deshalb während der Hauptzeit keine schnelle Magazinbewegung stattfinden. Je nach Stellung des als nächstes in die Spindel zu wechselnden Werkzeuges fällt dadurch eine mehr oder weniger große, immer aber störende Nebenzeit an. Bei dieser bekannten Maschine bestand der Greifermechanismus aus zwei gegenläufig angetriebenen Einzelgreifern, so daß auch der eigentliche Werkzeugwechselvorgang für heutige Ansprüche zu lange dauerte. Schließlich war die Größe des Magazins auf den Raum zwischen den beiden senkrechten Ständern eingeschränkt, so daß entweder das Magazin sehr klein sein mußte oder der Abstand der beiden Ständer größer gewählt werden mußte, als aus anderen Überlegungen notwendig, was einen praktisch nicht zu vertretenden Mehraufwand verursacht hätte.

Diese bekannte Maschine weist wesentliche Vorteile gegenüber anderen bekannten Werkzeugmaschinen vergleichbarer Art auf. Durch die Doppelständerkonstruktion wird im Prinzip eine sehr hohe Bearbeitungsgenauigkeit gewährleistet, weil ein Wärmewachstum in der X-Achse symmetrisch zur Spindel aufgefangen wird und sich dadurch nicht auswirkt. Weiter ist der Arbeitsraum, d. h. der Raum vor der Spindel, der vom Werkstück eingenommen werden kann, nur minimal eingeschränkt, weil das Werkzeug in der Wechselbereitschaftsstellung sich vollständig hinter der Frontkontur der ganzen Maschine befindet, so daß das Werkstück auf jeden Fall theoretisch bis kurz nach Beginn des eigentlichen Werkzeugwechselvorganges bis an die Spindeleinheit bzw. dem Ständer vorkragen kann, und zwar praktisch im gesamten Umfeld der Spindel. Schließlich kann der Werkzeugwechsel in jeder Position der Spindeleinheit erfolgen, auch in der tiefsten Position, was zu erheblichen Zeiteinsparungen führt, außerdem wird dadurch bei mehrfacher Bearbeitung in der gleichen Position die Einfahrtoleranz zu Null, was vorallem bei koaxialen Bearbeitungen (abgestuften Bohrungen im Werkstück) von besonderer Bedeutung ist, weil auf diese Weise die Koaxialität sehr gut gewährleistet ist.

Bei einer bekannten Werkzeugmaschine vergleichbarer Art werden alle Nachteile dieser bekannten Werkzeugmaschine vermieden und gleichzeitig alle Vorteile beibehalten.

Für Werkzeugmaschinen dieser und vergleichbarer Art hat sich inzwischen die Bezeichnung »Bearbeitungszentrum« eingeführt, und eine gute Übersicht über die verschiedenen Formen von bekannten Bearbeitungszentren ist enthalten in »TZ f. prakt. Metallbearb.« (Numerik) 63 (1969), Heft 6 (2, 1969, H. 6), Seiten 318 (50) bis 334 (66) und »Werkstatt und Betrieb« 102, 1969, Heft 7, Seiten 487 bis 493. In »Numerik«, Seite 317, rechte Spalte, Abschnitt 2, Absatz 1, wird ausdrücklich darauf hingewiesen, daß bei diesen Bearbeitungszentren im Jahre 1969 die Erscheinungsformen trotz oft gleicher Zielsetzung sehr unterschiedlich sind, anders als bei konventionellen Maschinen. Solche unterschiedlichen Erscheinungsformen trotz gleicher Zielsetzung sind ein typisches Anzeichen dafür, daß sich eine Idealform, oder wenigstens eine optimale Form, noch nicht herausgebildet hat, wobei unter einer Idealform natürlich eine Maschine zu verstehen ist, die die Nachteile anderer Maschinen vermeidet, aber deren Vorteile aufweist, während unter einer optimalen Maschine eine solche zu verstehen ist, die nur die Nachteile aufweist, die zur Erreichung der erstrebten Vorteile unumgänglich in Kauf genommen werden müssen.

Nach Erscheinen dieser Übersicht sind noch eine Reihe von Bearbeitungszentren bekanntgeworden, für die diese Erwägungen unverändert gelten. So ist bei dem Kleinbearbeitungszentrum BEA 1-H der Anmelderin einerseits auf die Doppelständerbauweise verzichtet worden, so daß das Werkzeugmagazin wesentlich größer ausgeführt werden konnte. Durch den Einsatz eines Winkel-Doppelgreifers wurde allerdings die Werkzeugwechselzeit gegenüber der mit gegenläufigen Einzelgreifern wesentlich verkürzt, ohne daß der Vorteil aufgegeben wurde, den Werkzeugwechsel in jeder Position der Spindeleinheit durchführen zu können.

Wegen der Vorteile der Doppelständerkonstruktion sind verschiedene Bearbeitungszentren auf der Grundlage einer Doppelständerkonstruktion bekanntgeworden. Bei bekannten Maschinen dieser Art ist das Werkzeugmagazin auf einer Seite des Doppelständers angeordnet und als Wechselmechanismus ist ein Winkel-Doppelgreifer vorgesehen (DIAG Werner Transfer-Center TC1; Deckel Hochleistungs-Bearbeitungszentrum S 500). Bei dieser Konstruktion muß die Spindeleinheit in eine Werkzeugwechselposition fahren, so daß die oben erwähnten Vorteile aufgegeben werden, nämlich Zeiteinsparung durch Wechsel in jeder Spindelposition und Vermeidung der Einfahrtoleranz. Diese Wechselposition muß darüber hinaus im oberen Bereich des Y-Weges der Arbeitsspindel liegen, damit lange Werkzeuge, die vom Winkel-Doppelgreifer beim Ein- oder Auswechseln aus der Spindel zwangsläufig nach unten schlagen, auch am Werkstücktisch vorbeipassieren können, so daß in vielen Fällen das Verfahren in die Wechselposition und zurück zur Bearbeitungsstelle beträchtliche Zeit erfordert.

Bei einem anderen bekannten Bearbeitungszentrum mit Doppelständer (DE-A-2 808 796) wird durch die Verwendung eines einfachen Doppelgreifers zwar der Verfahrweg zur Wechselposition etwas verkürzt, jedoch auf Kosten einer aufwendigen Greiferkonstruktion, bei der der vollständige Wechselvorgang eine erhebliche Zeit beansprucht; außerdem ragt das Werkzeug in der Stellung, in der es vom Doppelgreifer ergriffen werden kann, in den Arbeitsraum.

Bei einem weiteren bekannten Bearbeitungszentrum mit Doppelständer (Kearney & Trecker Marvin Ltd. KTM 400) wird das Werkzeug über zwei Zwischengreifer in eine der obersten Stellung der Spindeleinheit zugeordnete Wechselposition gebracht und von dort mit einem einfachen Doppelgreifer in die Spindel gewechselt. Für diese Konstruktion gelten sowohl die Nachteile einer Werkzeugwechselposition am oberen Ende des Y-Weges als auch die eines einfachen Doppelgreifers mit aufwendiger Greiferkonstruktion.

Bei einem anderen bekannten Bearbeitungszentrum mit Doppelständer ist ebenfalls ein einfacher Doppelgreifer vorgesehen, das Magazin ist fest auf der Oberseite des Doppelständers angeordnet (DE-A-2 001 871).

Auch bei diesem Bearbeitungszentrum muß die Werkzeugspindel in eine im oberen Bereich des Y-Weges liegende Wechselposition fahren, und darüber hinaus stehen die Werkzeuge bei diesem bekannten Bearbeitungszentrum nicht nur in der Wechselbereitschaftsstellung, sondern immer in den Arbeitsraum vor, wobei natürlich zu berücksichtigen ist, daß der Arbeitsraum sich ohne weiteres auch nach oben über die Werkzeugmaschine selbst hinauserstrecken kann, wenn nämlich bei hohen Werkstücken nur im unteren Bereich bearbeitet werden muß. Das kann natürlich auch dadurch erreicht werden, daß größere Werkstücke umgespannt werden.

Bei einem weiteren bekannten Bearbeitungszentrum mit Doppelständer (Hüller Hille, Horizontales Bearbeitungszentrum nb-h 80-1, nb-h 100-1) ist ebenfalls ein einfacher Doppelgreifer vorgesehen, das Magazin aber frei neben dem Doppelständer angeordnet. Auch hier muß die Spindeleinheit in eine Wechselposition (in der Mitte des Y-Weges) fahren, dazu muß der ganze Doppelständer bis zum rückwärtigen Ende des Z-Weges zurückfahren, so daß auch bei für den Werkzeugwechsel günstiger Bearbeitungsposition in Y-Richtung ein merklicher Zeitaufwand entsteht.

Es ist bereits ein Bearbeitungszentrum bekanntgeworden, bei dem die Doppelständerbauweise aufgegeben worden ist und bei dem das Werkzeugmagazin auf einer und die Spindeleinheit auf der anderen Seite eines Einfachständers, also getrennt, angeordnet und gemeinsam verfahrbar sind, wobei sich das Magazin oberhalb der Spindel befindet und ein Zwischengreifer vorgesehen ist, mit dem ein in die Spindel einzuwechselndes Werkzeug aus dem Magazin entnommen und in eine Wechselbereitschaftsstellung gebracht wird, aus der es dann mit einem einfachen Doppelgreifer in die Werkzeugspindel eingewechselt wird (DE-A-1 949 390). Der Arbeitsraum neben der Spindel ist bei diesem bekannten Bearbeitungszentrum frei, nicht jedoch der oberhalb der Spindel, abgesehen davon, daß eben die Vorteile der Doppelständerbauweise aufgegeben worden sind.

Bei Bearbeitungszentren mit Einzelständer ist es auch bereits bekannt, das Werkzeugmagazin am der Spindelwerkzeugaufnahme abgewandten Teil der Spindeleinheit anzuordnen und Werkzeuge über einen Zwischengreifer in Form eines Doppelgreifers in die Wechselbereitschaftsstellung zu transportieren, von wo es dann unmittelbar in die Spindel gewechselt wird (DE-A-1 477 347 und 1 477 358). Auch hierbei ragt das Werkzeug in der Wechselbereitschaftsstellung in den Arbeitsraum, auf die Vorteile der Doppelständerkonstruktion wurde verzichtet und das Magazin an die Spindeleinheit montiert, mit den eingangs erwähnten Nachteilen.

Es ist ferner ein Bearbeitungszentrum mit Einzelständer bekannt, bei dem ein in zwei Achsen schwenkbarer Einfachgreifer jeweils ein Werkzeug von der Spindel unmittelbar an einen lerren Magazinplatz bzw. vom Magazin in die leere Spindel bewegt; das Magazin ist dabei getrennt von der Spindeleinheit auf der gleichen Seite des Ständers angeordnet und gemeinsam mit der Spindeleinheit verfahrbar (US-A-4 122 597). Abgesehen davon, daß wieder auf die Vorteile der Doppelständerkonstruktion verzichtet wurde, wurde hier das erwünschte Freihalten des Arbeitsraumes in der Wechselbereitschaftstellung mit einer außerordentlich hohen Nebenzeit erkauft; zum Auswechseln eines Werkzeugs in der Spindel gegen eines im Magazin wird nicht nur das Doppelte der Laufzeit des Werkzeuges zwischen Spindel und Magazin benötigt, sondern dazu noch die Zeit, die dazu erforderlich ist, im Magazin das einzuwechselnde Werkzeug in die Wechselbereitschaftstellung zu bringen.

Aufgabe der Erfindung ist es deshalb, eine Werkzeugmaschine der eingangs genannten Art verfügbar zu machen, bei der die für den Werkzeugwechsel erforderliche Nebenzeit auf ein Minimum beschränkt ist und die Bearbeitungsgenauigkeit durch den automatischen Werkzeugwechsel nicht beeinträchtigt ist. Zur Erzielung einer hohen Bearbeitungsgenauigkeit darf sich eine eventuelle Wärmedehnung nicht auf die X-Achse auswirken. Weiter müssen die Z-Wege so kurz wie möglich sein, d. h. der Raum neben, unter und über der Spindel muß für das Werkstück frei gehalten werden. Weiterhin dürfen Erschütterungen beim Umlauf des Magazins nicht auf die Spindel übertragen werden. Schließlich muß ein Werkzeugwechsel in jeder Position der Spindeleinheit möglich sein, damit die Einfahrtoleranz ausgeschaltet wird.

Erfindungsgemäß wird deshalb von der eingangs genannten bekannten Werkzeugmaschine ausgegangen, nachdem sich überraschenderweise gezeigt hat, daß gerade diese Maschine einer Modifikation zur Lösung dieser Aufgabe am ehesten zugänglich ist. Diese Aufgabe wird durch eine Kombination von Maßnahmen gelöst, wie sie im Kennzeichenteil des Anspruchs 1 zusammengestellt ist.

Spezielle Ausgestaltungen der Erfindung je nach Einsatzzweck ergeben sich aus den Unteransprüchen.

Die Erfindung soll an Hand von in der Zeichnung dargestellten Ausführungsbeispielen näher erläutert werden; es zeigt

Fig. 1 eine Seitenansicht der bevorzugten Ausführungsform der Erfindung,

Fig. 2 eine Aufsicht auf die Ausführungsform nach Fig. 1,

Fig. 3 eine Fig. 2 entsprechende Aufsicht auf eine zweite Ausführungsform Erfindung, und

Fig. 4 eine Fig. 2 entsprechende Aufsicht auf eine dritte Ausführungsform der Erfindung.

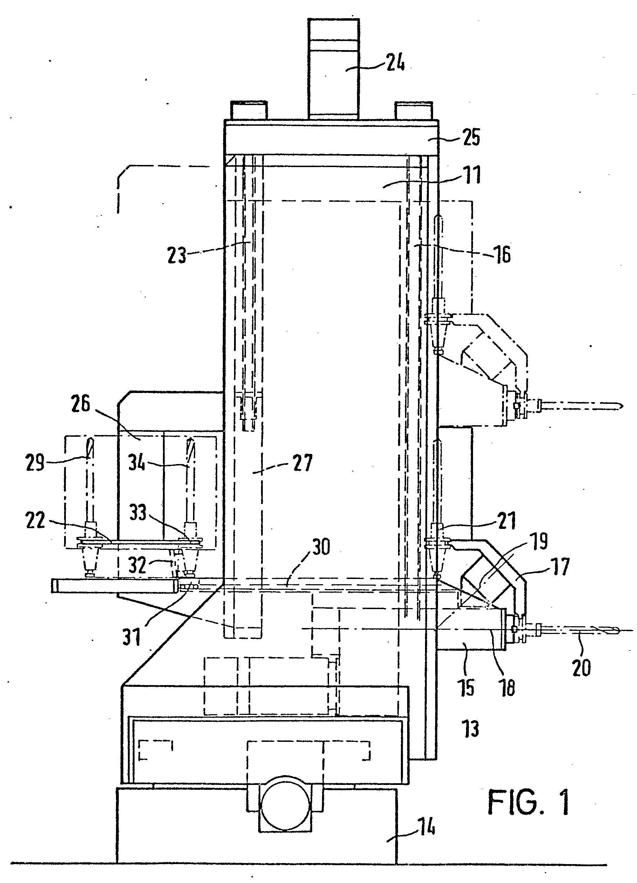

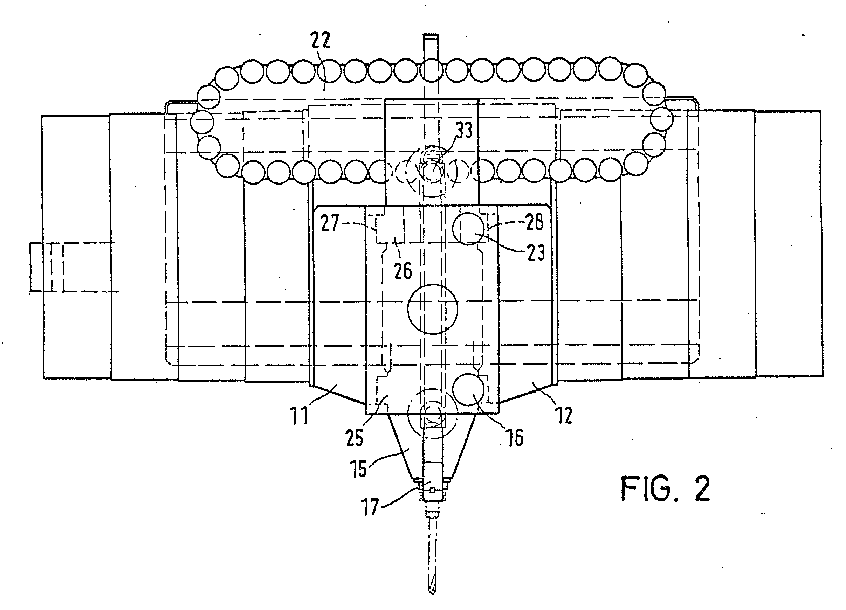

Die in Fig. 1 und 2 dargestellte Werkzeugmaschine weist zwei senkrechte Ständer 11 und 12 auf, die einen Doppelständer bilden, der in der dargestellten Ausführungsform auf einem Schlitten 13 angeordnet ist, welcher auf dem Maschinenbett 14 in X-Richtung verfahrbar ist. Diese Verfahrbarkeit in X-Richtung kann weggelassen werden, wenn der nicht dargestellte Werkstücktisch in dieser Richtung verfahrbar ist.

Zwischen den beiden Ständern 11 und 12 ist eine Spindeleinheit 15 in Y-Richtung nach oben und unten verfahrbar geführt, als Antrieb ist eine Kugelrollspindel 16 vorgesehen. Auf der Spindeleinheit 15 ist ein Winkel-Doppelgreifer 17 in der Weise angeordnet, daß er beim Schwenken um eine zur Spindelachse 18 unter 45° liegende Achse 19 ein als Phantom dargestelltes Werkzeug 20 in der Spindel gegen ein in der Wechselbereitschaftsstellung senkrecht zur Spindelachse 18 und über der Spindel stehendes, ebenfalls als Phantom dargestelltes Werkzeug 21 auswechselt. Aufbau und Wirkungsweise eines derartigen Winkel-Doppelgreifers sind bekannt.

Im dem das Werkzeug 20 aufnehmenden Teil der Spindeleinheit 15 abgewandten Teil der Ständer 11 und 12 ist ein Werkzeugmagazin 22 parallel zur Spindeleinheit 15 auf und ab bewegbar geführt, als Antrieb ist ebenfalls eine Kugelrollspindel 23 vorgesehen. Beide Kugelrollspindeln 16 und 23 werden in der dargestellten Ausführungsform von einem gemeinsamen Antriebsmotor 24 angetrieben, der auf einer die beiden Ständer 11 und 12 überdeckenden Platte 25 angeordnet ist. Statt dessen können auch zwei getrennte Antriebsmotoren vorgesehen sein, die gleichläufig angetrieben werden, in der Weise, daß die Spindeleinheit 15 und das Werkzeugmagazin 22 synchron auf und ab bewegt werden, so daß die räumliche Beziehung des Werkzeugmagazins 22 zur Spindeleinheit 15 konstant bleibt. Wie am besten aus Fig. 2 ersichtlich ist, ist das Magazin 22 bei der dargestellten Ausführungsform ein Kettenmagazin, das auf der dem Winkel-Doppelgreifer 17 abgewandten Seite der Ständer 11 und 12 außerhalb dieser von einem Haltearm 26 gehaltert ist, der seinerseits von einer Kugelrollspindel 23 angetrieben und an den Führungen 27, 28 der beiden Ständer 11 und 12 geführt ist. Im Werkzeugmagazin 22 sind die Werkzeuge wie 29 senkrecht zur Spindelachse 18 stehend angeordnet.

Ersichtlich kann das Kettenmagazin 22 auch durch ein Tellermagazin ersetzt werden, ohne daß nennenswerte konstruktive Änderungen erforderlich sind. Sowohl Kettenmagazine als auch Tellermagazine sind bekannt, es ist auch bekannt, Tellermagazine zur Vergrößerung der Werkzeugauswahl automatisch auszuwechseln; nähere Erläuterungen sind deshalb für den Fachmann nicht erforderlich.

Unterhalb des Werkzeugmagazins 22 und oberhalb der Spindeleinheit 15 ist eine sich vom Werkzeugmagazin 22 bis zum Winkel-Doppelgreifer 17 erstreckende Führungsbahn 30 vorgesehen, in der ein Schlitten 31 geführt ist, der einen Zwischengreifer 32 trägt. Der Zwischengreifer 32 dient dazu, ein in der mit 33 bezeichneten Position des Magazins 22 befindliches Werkzeug 34 in die Wechselbereitschaftsposition zu befördern, so daß es die Stelle des Werkzeugs 21 einnimmt bzw. das Werkzeug 21 an den Magazinplatz 33 zurückzubefördern. Aufbau und Wirkungsweise von solchen Zwischengreifern sind dem Fachmann bekannt und brauchen deshalb nicht näher erläutert zu werden.

Die Maschine nach Fig. 1 und 2 erfüllt sämtliche eingangs aufgestellten Forderungen. Ein Werkzeugwechsel ist nicht nur in jeder Stellung der Spindeleinheit 15 möglich, sondern sogar während des Verfahrens der Spindeleinheit 15 in die nächste Bearbeitungsposition, sogar im Eilgang. Das Werkzeug 21 in der Wechselbereitschaftsposition kragt nicht in den Arbeitsbereich, d. h. der Raum neben, unter und über der Spindel ist normalerweise frei, d. h. das Werkstück kann in diesen auskragen. Nur während des eigentlichen Wechselvorgangs ist ein freier Raum erforderlich, der aber normalerweise schon dadurch gewährleistet ist, daß das bisher im Eingriff befindliche Werkzeug aus dem Werkstück zurückgezogen sein muß bzw. das Werkstück von der Maschine zurückgezogen sein muß (Z-Bewegung, die sowohl von der Bearbeitungseinheit als auch vom Werkstück durchgeführt werden kann, je nach Arbeitserfordernissen). Die Vorteile der Doppelständerbauweise sind ersichtlich erhalten. Durch eine Magazinbewegung verursachte Erschütterungen können aber nicht auf die Spindeleinheit 15 übertragen werden, da solche Ständer von Haus aus so ausgelegt sein müssen, daß derartige Erschütterungen nicht übertragen werden. Die Wechselzeit ist extrem kurz, bekanntlich wird durch Winkel-Doppelgreifer die kürzest mögliche Wechselzeit erreicht, da Auswechseln des bisher benutzten Werkzeuges und Einwechseln des nächstfolgenden Werkzeuges gleichzeitig erfolgen und speziell beim Winkel-Doppelgreifer die Arme und damit die Fliehkräfte besonders klein gehalten werden können.

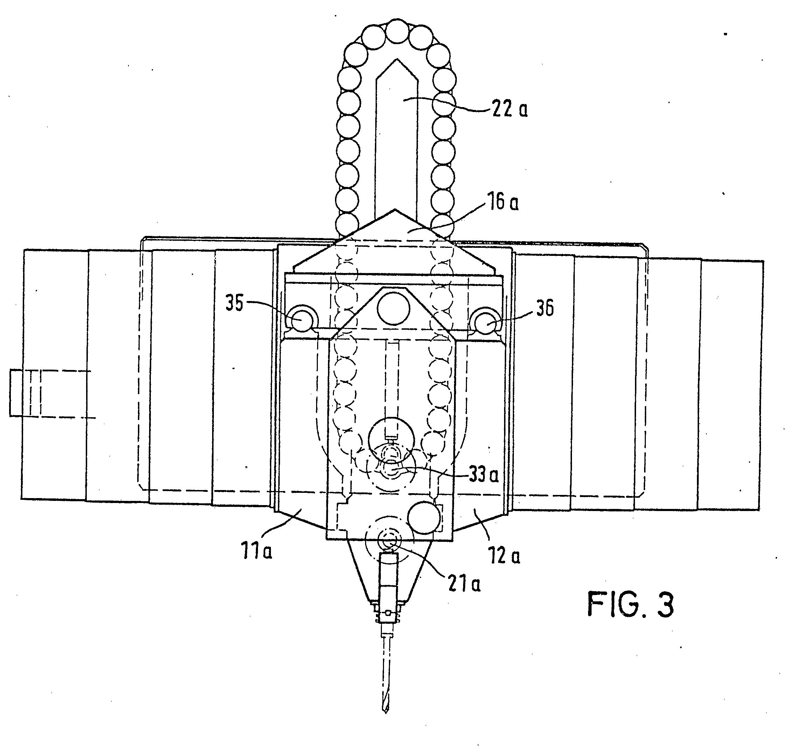

In dem Sonderfall, daß mit mehreren Werkzeugen nacheinander sehr kurz dauernde Bearbeitungsvorgänge auszuführen sind, kann die Zeit, die für den Transport eines ausgewechselten Werkzeuges zurück zum Magazin 22 und des nächsten Werkzeuges in die Wechselbereitschaftsstellung benötigt wird, so groß werden, daß die Nebenzeit verlängert wird. Wenn dieser sehr seltene Fall berücksichtigt werden soll, kann die Erfindung gemäß Fig. 3 ausgeführt werden. Die in Fig. 3 dargestellte Ausführungsform unterscheidet sich von der nach Fig. 1 und 2 im wesentlichen nur dadurch, daß das Werkzeugmagazin 22a sich zwischen den beiden Ständern 11a und 12a hindurch bis in die Nähe der Wechselbereitschaftsstellung 21a erstreckt, so daß die Entfernung zwischen dem Magazinplatz 33a und der Wechselbereitschaftsstellung 21a verkleinert wird. Es ist dann zwar noch ein Zwischengreifer entsprechend dem Zwischengreifer 32 der Ausführungsform nach Fig. 1 und 2 erforderlich, dieser braucht jedoch nur einen sehr kurzen Weg zurückzulegen, so daß die erforderliche Zeit sehr stark reduziert ist, ohne daß der wesentliche Vorteil eines Zwischengreifers, nämlich die Möglichkeit, mit der einfachen Magazinplatzcodierung anstelle der wesentlich aufwendigeren Werkzeugcodierung auszukommen, aufgegeben werden müßte. Ferner unterscheidet sich die Ausführungsform nach Fig. 3 von der nach Fig. 1 und 2 noch darin, daß der das Magazin 22a tragende Schlitten 16a in Rundführungen 35, 36 geführt ist, die auf die Rückseite der Ständer 11a bzw. 12a montiert sind. Grundsätzlich könnten jedoch auch Flachführungen auf den Ständerinnenseiten verwendet werden, wie umgekehrt Rundführungen auf der Ständerrückseite auch bei der Ausführungsform nach Fig. 1 und 2 in Betracht kommen, wobei dort allerdings das Magazin 22 entsprechend weiter herausgerückt werden müßte.

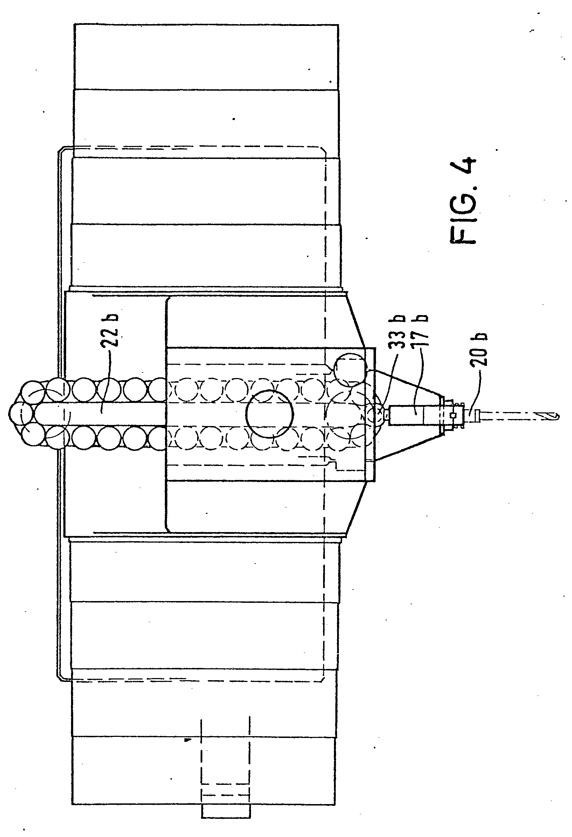

Statt dessen kann auch die Ausführungsform nach Fig. 4 gewählt werden, bei der auf einen Zwischengreifer ganz verzichtet ist. Das Werkzeugmagazin 22b dieser Ausführungsform ist in erster Näherung genauso angeordnet wie das Werkzeugmagazin 22a der Ausführungsform nach Fig. 3, erstreckt sich jedoch bis zur Wechselbereitschaftsposition, so daß die Wechselbereitschaftsposition und der entsprechende Magazinplatz 33b zusammenfallen. Der Winkel-Doppelgreifer 17b erfaßt bei dieser Ausführungsform unmittelbar das Werkzeug im Magazinplatz 33b und wechselt es gegen das vorher im Einsatz befindliche Werkzeug 20b aus.

Bei dieser Ausführungsform ist allerdings die Werkzeugcodierung unerläßlich, da das bisher im Einsatz befindliche Werkzeug nach dem Wechselvorgang zwangsläufig an dem Magazinplatz ist, der vorher von dem nunmehr im Einsatz befindlichen, eingewechselten Werkzeug eingenommen wurde. Unter »Werkzeugcodierung« ist hierbei selbstverständlich sowohl die echte Markierung des Werkzeuges als auch eine Verfolgung der Magazinplatzbelegung durch die Maschinensteuerung zu verstehen.

**Patentansprüche**

1. Werkzeugmaschine mit automatischem Werkzeugwechsel, mit waagerechter, in einem Doppelständer (11, 12) geführter Spindel (15), bei der das Werkzeugmagazin (22) oberhalb der Spindel (15) in konstanter räumlicher Beziehung zu dieser angeordnet ist und die Werkzeuge senkrecht zur Spindelachse (18) hält, und ein die Werkzeuge (20, 21, 29, 33) in die Spindelachse (18) schwenkender Greifermechanismus (17, 32) an der Spindeleinheit (15) angeordnet ist, gekennzeichnet durch die Kombination folgender Merkmale:

a)  Das Werkzeugmagazin (22) ist von der Spindeleinheit (15) getrennt, aber gemeinsam mit dieser verfahrbar;

b)  das Werkzeugmagazin (22) ist im der Spindelaufnahme fernen Teil der beiden Ständer (11, 12) geführt, und

c)  der Greifermechanismus weist einen Winkel-Doppelgreifer (17) auf.

2. Werkzeugmaschine nach Anspruch 1, dadurch gekennzeichnet, daß der Greifermechanismus einen Zwischengreifer (32) aufweist, der auf einer sich vom Werkzeugmagazin (22) bis zur Wechselbereitschaftsstellung (21) über der Spindel (18) erstreckenden Führung (30) geführt ist.

3. Werkzeugmaschine nach Anspruch 1 oder 2, dadurch gekennzeichnet, daß das Werkzeugmagazin (22) ein Kettenmagazin ist.

4. Werkzeugmaschine nach Anspruch 2, dadurch gekennzeichnet, daß das Werkzeugmagazin (22) ein Tellermagazin ist.

5. Werkzeugmaschine nach Anspruch 4, dadurch gekennzeichnet, daß das Tellermagazin automatisch auswechselbar ist.

**Claims**

1. Machine tool with automatic tool change having a horizontal spindle (15) quided in a double column frame (11, 12), in which the tool magazine (22) is disposed above said spindle (15) in constant special relationship thereto and holds the tools perpendicular to the spindle axis (18), and a gripping mechanism (17, 32) is disposed at said spindle unit (15), which gripping mechanism is adapted to pivot said tools (20, 21, 29, 33) into the axis (18), characterized by the combination of the following features:

a) the tool magazine (22) is separate from the spindle unit (15), but movable in unison therewith;

b) said tool magazine (22) is guided in the parts of the two columns (11, 12) remote from the tool receiving portion of said spindle, and

c) said gripping mechanism includes an angular double claw (17).

2. Machine tool according to claim 1, characterized in that said gripping mechanism includes an intermediate gripper (32) which is guided on a guiding means (30) extending from said tool magazine (22) up to the position (21) for preparation of exchange above said spindle (18).

3. Machine tool according to claim 1 or 2, characterized in that said tool magazine (22) is a chain magazine.

4. Machine tool according to claim 2, characterized in that said tool magazine (22) is a plate magazine.

5. Machine tool according to claim 4, characterized in that said plate magazine is adapted for automatic exchange.

## Revendications

1. Machine-outil à échange automatique de l'outil comprenant une broche (15) guidée dans un montant double (11, 12), dans laquelle le magasin à outils (22) est disposé au-dessus de la broche (15) en relation spatiale invariable par rapport à celle-ci et maintient les outils perpendiculairement à l'axe de la broche (18), et un mécanisme preneur (17, 32) faisant pivoter les outils (20, 21, 29, 33) dans l'axe de la broche (18) est disposé sur l'unité-broches (15), caractériséen par la combinaison des dispositions suivantes:

a) le magasin à outils (22) est séparé de l'unitébroches (15) mais peut être entrainé en commun avec celle-ci;

b) le magasin à outils (22) est guidé dans la partie des deux montants (11, 12) éloignée du raccordement de broche, et

c) le mécanisme preneur présente un preneur double angulaire (17).

2. Machine-outil suivant la revendication 1, caractérisé en ce que le mécanisme preneur présente un preneur intermédiaire (32), qui est guidé sur une glissière (30) s'étendant, au-dessus de la broche (18), du magasin à outils (22) jusqu'à la position d'attente pour l'échange (21).

3. Machine-outil suivant la revendication 1 ou 2, caractérisée en ce que le magasin à outils (22) est un magasin à chaine.

4. Machine-outil suivant la revendication 2, caractériséen ce que le magasin à outils (22) est un magasin à plateaux.

5. Machine-outil suivant la revendication 4, caractérisée en ce que le magasin à plateaux peut être remplacé automatiquement.

FIG. 1

FIG. 2

FIG. 3

FIG. 4

22 b

33 b
17 b

20 b